# NEUE EUROPÄISCHE PATENTSCHRIFT

(11) **EP 1 866 451 B2**
(45) Veröffentlichungstag und Bekanntmachung des Hinweises auf die Entscheidung über den Einspruch: **16.12.2020**
(45) Hinweis auf die Patenterteilung: 14.11.2018
(21) Anmeldenummer: 06723905.3
(22) Anmeldetag: 31.03.2006
(51) Int. Cl.: C22C 9/04, F16C 33/12

(54) **VERWENDUNG EINER KUPFER-ZINK-LEGIERUNG**
USE OF A COPPER ZINC ALLOY
UTILISATION D'UN ALLIAGE CUIVRE-ZINC

(30) Priorität: 04.04.2005 DE 102005015467
(43) Veröffentlichungstag der Anmeldung: 19.12.2007
(73) Patentinhaber: Diehl Metall Stiftung & Co. KG, 90552 Röthenbach (DE)
(72) Erfinder: GAAG, Norbert, 91207 Lauf (DE)
(74) Vertreter: Diehl Patentabteilung
(86) Internationale Anmeldenummer: PCT/EP2006/002945
(87) Internationale Veröffentlichungsnummer: WO 2006/105910

(56) Entgegenhaltungen:
- EP-A- 1 318 206
- CN-A- 102 851 533
- DE-A1- 2 145 710
- DE-A1- 2 919 478
- DE-A1- 3 427 740
- DE-A1- 3 805 794
- DE-A1- 3 809 994
- DE-B- 1 194 153
- DE-B- 1 238 220
- DE-C- 764 372
- JP-A- S6 134 154
- JP-A- 62 250 138
- JP-A- S56 127 741
- JP-A- S56 163 231
- JP-A- S60 174 843
- Mann: "Legierungen mit Kupfer als Hauptbestandteil" In: R. KÜHNEL: "Werkstoffe für Gleitlager", 1952, XP055630703, pages 248-251,261-273,

## Beschreibung

Die Erfindung betrifft eine Verwendung einer Kupfer-Zink-Legierung.
Aus der DE 29 19 478 A1 und der DE 38 05 794 A1 sind Kupfer-Zink-Legierungen zur Verwendung als Werkstoff für Synchronringe bekannt. Aus der EP 1 318 206 A1 ist eine Kupfer-Aluminium-Legierung mit definierten Deckschichten bekannt.
Damit ein Werkstoff als Gleitlager einsetzbar ist, muss der Werkstoff unter anderem einen geringen Reibungsbeiwert zur Vermeidung von "Fressern" und einen hohen Verschleißwiderstand für eine hohe Standzeit aufweisen. Für ein Gleitlager in einem Verbrennungsmotor werden derzeit Kupfer-Zink-Legierungen des Typs CuZn31Si1 verwendet. Die Eigenschaften der CuZn31Si1-Legierungen genügen jedoch nicht mehr den Anforderungen, die an Werkstoffe für Gleitlager in modernen Motoren gestellt werden. In solchen Dieselmotoren kann die Arbeitstemperatur der Gleitlager 300°C erreichen und überschreiten. Die eingesetzten Kupfer-Zink-Legierungen erweichen jedoch bei Temperaturen um 250°C. Folglich weisen Gleitlager aus dieser Legierung bei der Arbeitstemperatur nicht mehr die erforderliche Festigkeit auf. In Erkenntnis dieser Gegebenheiten legt vorliegende Erfindung deshalb die Problemstellung zu Grunde, eine Kupfer-Zink-Legierung für eine Verwendung als Werkstoff für Gleitlager bereitzustellen, wobei die Kupfer-Zink-Legierung den Anforderungen an einen Werkstoff für Gleitlager genügt, insbesondere bei erhöhten Temperaturen und auch einfach herzustellen ist.
Die Aufgabe wird erfindungsgemäß gelöst durch die Verwendung einer Kupfer-Zink-Legierung als Werkstoff für Gleitlager, wie sie in Anspruch 1 angegeben ist. Vorteilhafte Ausführungsformen der Erfindung sind in den Unteransprüchen 2 bis 16 angegeben.

Die Angaben in Prozent beziehen sich dabei und im Folgenden auf Gewichtsprozent.

Damit wird also eine neue Verwendung für eine Kupfer-Zink-Legierung angegeben. Eine ähnliche Legierung gemäß der DE 29 19 478 C2 wird als Synchronringlegierung eingesetzt und ist der Fachwelt infolge dieses Einsatzgebiets als Legierung bekannt, die in Kombination mit den anderen intrinsischen Materialeigenschaften einen hohen Reibungsbeiwert bzw. -koeffizient aufweist. Ein hoher Reibungsbeiwert ist jedoch nachteilig für die Verwendung eines Werkstoffs als Gleitlager, denn ein hoher Reibungsbeiwert beschreibt eine starke Wechselwirkung zwischen Gleitlager und dessen Umgebung und äußert sich durch eine starke Neigung sich beim Gleitvorgang zu fressen. Daher ist der für die neue Verwendung als Gleitlager beanspruchte Werkstoff bisher nicht als Gleitlagerwerkstoff in Betracht gezogen worden. In Relation zum Reibungsbeiwert der bisher eingesetzten CuZn31Si1-Legierungen ist der Reibungsbeiwert der beanspruchten Kupfer-Zink-Legierung jedoch niedriger als der von bekannten Gleitlagerwerkstoffen. Dies ist völlig überraschend und widerspricht dem einem Fachmann geläufigen und für eine Synchronringlegierung eingeprägten "hohen" Reibungsbeiwert.

Neben dem niedrigen Reibungsbeiwert und einem guten Verschleißwiderstand hat sich gezeigt, dass die beanspruchte Kupfer-Zink-Legierung eine überraschend gute Temperaturbeständigkeit aufweist. Durch diese unerwartete Kombination der Materialeigenschaften wird eine Verwendung als Werkstoff für Gleitlager überhaupt erst ermöglicht.

Dem Erfordernis der guten und einfachen Herstellbarkeit wird dadurch Rechnung getragen, dass der Werkstoff für Gleitlager in Stangenform durch halb- oder vollkontinuierlichen Strangguss, Strangpressen und Ziehen also durch Warm- und Kaltverformung herstellbar ist.

Die Legierung weist ein Gefüge auf, das einen Alpha-Mischkristallanteil und einen Beta-Mischkristallanteil beinhaltet.

In einer vorteilhaften Weiterbildung umfasst die Kupfer-Zink-Legierung für die Verwendung als Werkstoff für Gleitlager 68 - 72,5 % Kupfer, 5,8 - 8,5 % Mangan, 3,6 - 6,3 % Aluminium, 0,5 - 3,3 % Silizium, 0,2 - 2,5 % Eisen, 0,2 - 1,9 % Blei, 0 - 1,5 % Nickel, 0 - 0,4 % Zinn, Rest Zink sowie unvermeidbare Verunreinigungen.

Das Gefüge der weitergebildeten und gemäß der DE 29 19 478 C2 hergestellten Legierung besteht aus einer Alpha- und Beta-Mischkristallmatrix mit bis zu 60 - 85 % Alphaphase. Das Gefüge enthält auch harte intermetallische Verbindungen, beispielsweise Eisen-Mangan-Silizide. Die Alphaphase ist entscheidend für die Temperaturbeständigkeit der Legierung.

Gleitlager aus dieser Legierung weisen einen besonders hohen Verschleißwiderstand auf, der sogar deutlich höher ist als der der Legierung CuZn31Si1. Der geringe Trockenreibverschleiß bei Gleitlagern aus besagter Legierung hat ein besseres Verhalten unter Mangelschmierungsbedingungen zur Folge. Somit gewährleistet der hohe Verschleißwiderstand auch die Notlaufeigenschaften eines Gleitlagers. Die verschleißmindernde Wirkung ist insbesondere bei Temperaturen um 300°C der Arbeitstemperatur der Gleitlager in modernen Motoren besonders vorteilhaft.

Im Vergleich zu den bisher verwendeten CuZn31Si1-Legierungen weist der neue beanspruchte Gleitlagerwerkstoff eine geringere Neigung zum Fressen auf, was durch den signifikant verringerten Reibbeiwert bedingt ist.

In einer bevorzugten Alternative wird die Verwendung einer Kupfer-Zink-Legierung beansprucht, wobei die Legierung 68,9 - 71,4 % Kupfer, 6,9 - 8,5 % Mangan, 4,3 - 6 % Aluminium, 1,1 - 2,6 % Silizium, 0,4 - 1,9 % Eisen, 0,3 - 1,6 % Blei, 0 - 0,8 % Nickel, 0 - 0,4 % Zinn, Rest Zink sowie unvermeidbare Verunreinigungen.

Das Gefüge der in üblicher Weise hergestellten Legierung weist eine Alpha- und Betakristallmatrix mit bis zu 80 % verteilter Alphaphase auf. Darüber hinaus sind harte intermetallische Verbindungen beispielsweise Eisen-Mangan-Silizide enthalten.

Vorteilhaft für die Verwendung dieser Legierung als Werkstoff für Gleitlager ist, dass im angestrebten Arbeitsbereich oberhalb 300°C ein stabiles hohes Härteniveau vorliegt und die Erweichung der Legierung erst weit über 100 K oberhalb der Erweichungstemperatur von derzeit eingesetzten CuZn31Si1-Legierungen beginnt.

Vorteilhafterweise wird als Werkstoff für Gleitlager eine Kupfer-Zink-Legierung verwendet, wobei die Legierung 69,5 - 70,5 % Kupfer, 7,4 - 8,1 % Mangan, 4,8 - 5,7 % Aluminium, 1,5 - 2,2 % Silizium, 0,8 - 1,4 % Eisen, 0,4 - 1,2 % Blei, 0 - 0,3 % Nickel, 0 - 0,4 % Zinn, Rest Zink sowie unvermeidbare Verunreinigungen umfasst.

Das Gefüge besagter und entsprechend hergestellter Legierung weist eine Grundmasse von Beta-Mischkristallen auf, in die Alphaausscheidungen eingebettet sind. In dem Gefüge sind ebenfalls regellos disperse Mangan-Eisen-Silizide enthalten. Diese Legierung weist neben einem niedrigen Reibungsbeiwert und einem hohen Verschleißwiderstand eine hohe Erweichungstemperatur auf.

In einer bevorzugten Alternative wird als Werkstoff für Gleitlager eine Kupfer-Zink-Legierung verwendet, wobei die Legierung 69,4 - 71,4 % Kupfer, 7,4 - 8,1 % Mangan, 4,8 - 5,7 % Aluminium, 1,7 - 2,2 % Silizium, 0,8 - 1,4 % Eisen, 0,4 - 1,2 % Blei, 0 - 0,3 % Nickel, 0 - 0,4 % Zinn, Rest Zink sowie unvermeidbare Verunreinigungen umfasst.

Gleitlager aus dieser Legierung weisen einen besonders hohen Verschleißwiderstand auf. Der geringe Trockenreibverschleiß bei Gleitlagern aus besagter Legierung hat ein besseres Verhalten unter Mangelschmierungsbedingungen zur Folge. Somit gewährleistet der hohe Verschleißwiderstand auch die Notlaufeigenschaften eines Gleitlagers. Die verschleißmindernde Wirkung ist insbesondere bei Temperaturen um 300°C der Arbeitstemperatur der Gleitlager in modernen Motoren besonders vorteilhaft.

Der hohe Verschleißwiderstand wird durch intermetallische Verbindungen, insbesondere Eisen-Mangan-Silizide bestimmt, wobei der Verschleißwiderstand mit zunehmendem Anteil an intermetallischen Verbindungen in der Legierung steigt. Ein hoher Anteil an intermetallischen Verbindungen wird durch einen hohen Si-Anteil bewirkt, wobei ein hoher Anteil der α-Phase für die Temperaturbeständigkeit durch den hohen Cu-Gehalt gewährleistet ist.

In einer weiteren Ausführungsform wird als Werkstoff für Gleitlager eine Kupfer-Zink-Legierung verwendet, wobei die Legierung mehr als 70 und bis zu 71,4 % Kupfer, 7,4 - 8,1 % Mangan, 4,8 - 5,7 % Aluminium, 1,8 - 2,2 % Silizium, 0,8 - 1,4 % Eisen, 0,4 - 1,2 % Blei, 0 - 0,3 % Nickel, 0 - 0,4 % Zinn, Rest Zink sowie unvermeidbare Verunreinigungen umfasst.

Gleitlager aus dieser Legierung weisen einen besonders hohen Verschleißwiderstand auf. Der geringe Trockenreibverschleiß bei Gleitlagern aus besagter Legierung hat ein besseres Verhalten unter Mangelschmierungsbedingungen zur Folge. Somit gewährleistet der hohe Verschleißwiderstand auch die Notlaufeigenschaften eines Gleitlagers. Die verschleißmindernde Wirkung ist insbesondere bei Temperaturen um 300°C der Arbeitstemperatur der Gleitlager in modernen Motoren besonders vorteilhaft.

Der hohe Verschleißwiderstand wird durch intermetallische Verbindungen, insbesondere Eisen-Mangan-Silizide bestimmt, wobei der Verschleißwiderstand mit zunehmendem Anteil an intermetallischen Verbindungen in der Legierung steigt.

Ein hoher Anteil an intermetallischen Verbindungen wird durch einen hohen Si-Anteil bewirkt, wobei ein hoher Anteil der α-Phase für die Temperaturbeständigkeit der Legierung durch den hohen Cu-Gehalt bei gleich bleibendem Eisen- und Mangangehalt gewährleistet ist.

In einer bevorzugten Alternative wird als Werkstoff für Gleitlager eine Kupfer-Zink-Legierung verwendet, wobei die Legierung 63,5 - 67,5 % Kupfer, 6 - 8,5 % Mangan, 3,6 - 6,3 % Aluminium, 0,5 - 3 % Silizium, 0,2 - 2,5 % Eisen, 0,02 - 1,8 % Blei, 0 - 1,5 % Nickel, 0 - 0,4 % Zinn, Rest Zink sowie unvermeidbare Verunreinigungen umfasst.

Das Gefüge der weitergebildeten und gemäß der DE 29 19 478 C2 hergestellten Legierung besteht aus einer Alpha- und Beta-Mischkristallmatrix mit bis zu 60 - 85 % Alphaphase. Im Gefüge sind harte intermetallische Verbindungen, beispielsweise Eisen-Mangan-Silizide enthalten. Die Alphaphase ist entscheidend für die Temperaturbeständigkeit der Legierung.

Die Eignung zur Verwendung als Werkstoff für Gleitlager in modernen Motoren erfordert die Kombination von hoher Temperaturbeständigkeit oberhalb 300°C mit gutem Verschleißwiderstand, der infolge des Gleitens eines aus derartigen Werkstoffen gefertigten Bauteils notwendig ist. Darüber hinaus ist ein niedriger Reibungsbeiwert erforderlich, durch den die Gleitfähigkeit eines aus einem derartigen Werkstoff gefertigten Bauteils verbessert wird.

Die Verwendung der besagten Legierung für Gleitlager ist besonders vorteilhaft, da sie gegenüber den bisher verwendeten Kupfer-Zink-Legierungen ein deutlich verbessertes Verschleißverhalten aufweist und damit auch die Notlaufeigenschaften eines Gleitlagers gewährleistet.

In einer weiteren Ausgestaltung wird die Verwendung einer Kupfer-Zink-Legierung beansprucht, wobei die Legierung 64,5 - 66,5 % Kupfer, 6,9 - 8,5 % Mangan, 4,3 - 6 % Aluminium, 0,9 - 2,6 % Silizium, 0,4 - 1,9 % Eisen, 0,1 - 1,3 % Blei, 0 - 0,8 % Nickel, 0 - 0,4 % Zinn, Rest Zink sowie unvermeidbare Verunreinigungen umfasst.

Das Gefüge der in üblicher Weise hergestellten Legierung weist eine Alpha- und Betakristallmatrix mit bis zu 80 % verteilter Alphaphase auf. Darüber hinaus sind harte intermetallische Verbindungen beispielsweise Eisen-Mangan-Silizide enthalten.

Vorteilhaft für die Verwendung dieser Legierung als Werkstoff für Gleitlager ist, dass im angestrebten Arbeitsbereich oberhalb 300°C ein stabiles hohes Härteniveau vorliegt und die Erweichung der Legierung erst weit über 100 K oberhalb der Erweichungstemperatur von derzeit eingesetzten CuZn31Si1-Legierungen beginnt.

In einer weiteren Ausführungsform wird als Werkstoff für Gleitlager eine Kupfer-Zink-Legierung verwendet, wobei die Legierung 65,1 - 66 % Kupfer, 7,4 - 8,1 % Mangan, 4,8 - 5,7 % Aluminium, 1,3 - 2 % Silizium, 0,8 - 1,4 % Eisen, 0,2 - 0,9 % Blei, 0 - 0,3 % Nickel, 0 - 0,4 % Zinn, Rest Zink sowie unvermeidbare Verunreinigungen umfasst.

Das Gefüge besagter und entsprechend hergestellter Legierung weist eine Grundmasse von Beta-Mischkristallen mit Alphaausscheidungen auf. In dem Gefüge sind regellos disperse Eisen-Mangan-Silizide enthalten.

Diese Legierung weist neben einem niedrigen Reibungsbeiwert und einem hohen Verschleißwiderstand auch eine hohe Erweichungstemperatur auf.

In einer bevorzugten Alternative wird als Werkstoff für Gleitlager eine Kupfer-Zink-Legierung verwendet, wobei die Legierung 65,1 - 66 % Kupfer, 7,4 - 8,1 % Mangan, 4,8 - 5,7 % Aluminium, 1,7 - 2 % Silizium, 0,8 - 1,4 % Eisen, 0,2 - 0,9 % Blei, 0 - 0,3 % Nickel, 0 - 0,4 % Zinn, Rest Zink sowie unvermeidbare Verunreinigungen umfasst.

Die Verwendung der besagten Legierung für Gleitlager ist besonders vorteilhaft, da sie gegenüber den bisher verwendeten Kupfer-Zink-Legierungen ein deutlich verbessertes Verschleißverhalten aufweist und damit auch die Notlaufeigenschaften eines Gleitlagers gewährleistet.

Der hohe Verschleißwiderstand wird durch intermetallische Verbindungen, insbesondere Eisen-Mangan-Silizide bestimmt. Der Verschleißwiderstand nimmt mit zunehmendem Anteil der intermetallischen Verbindungen an Legierung zu. Ein hoher Anteil an intermetallischen Verbindungen wird durch einen hohen Si-Anteil bewirkt.

In einer weiteren Ausführungsform wird als Werkstoff für Gleitlager eine Kupfer-Zink-Legierung verwendet, wobei die Legierung 65,1 - 66 % Kupfer, 7,4 - 8,1 % Mangan, 4,8 - 5,7 % Aluminium, 1,8 - 2 % Silizium, 0,8 - 1,4 % Eisen, 0,2 - 0,9 % Blei, 0 - 0,3 % Nickel, 0 - 0,4 % Zinn, Rest Zink sowie unvermeidbare Verunreinigungen umfasst.

Die Verwendung der besagten Legierung für Gleitlager ist besonders vorteilhaft, da sie gegenüber den bisher verwendeten Kupfer-Zink-Legierungen ein deutlich verbessertes Verschleißverhalten aufweist und damit auch die Notlaufeigenschaften eines Gleitlagers gewährleistet.

Der hohe Verschleißwiderstand wird durch intermetallische Verbindungen, insbesondere Eisen-Mangan-Silizide bestimmt. Der Verschleißwiderstand nimmt mit zunehmendem Anteil der intermetallischen Verbindungen an Legierung zu. Ein hoher Anteil an intermetallischen Verbindungen wird durch einen hohen Si-Anteil bewirkt.

In einer bevorzugten Alternative wird als Werkstoff für Gleitlager eine Kupfer-Zink-Legierung verwendet, wobei die Legierung 68,3 - 72,7 % Kupfer, 5,7 - 8,5 % Mangan, 3,6 - 6,3 % Aluminium, 0,5 - 3,3 % Silizium, 0,2 - 2,5 % Eisen, 0 - 0,1 % Blei, 0 - 1,5 % Nickel, 0 - 0,4 % Zinn, Rest Zink sowie unvermeidbare Verunreinigungen umfasst.

Diese Legierung hat die besondere Eigenschaft, dass sie infolge des geringen Bleigehalts als bleifreie Legierung gilt und daher einen Werkstoff für Gleitlager darstellt, der auch dem im Motorenbau zunehmend an Bedeutung gewinnenden Umweltaspekt Rechnung trägt. Zusätzlich übertrifft die Kombination der für Gleitlager wichtigen Eigenschaften dieser Legierung die Eigenschaften bekannter Gleitlagerwerkstoffe.

Das Gefüge der weitergebildeten und gemäß der DE 29 19 478 C2 hergestellten Legierung besteht aus einer Alpha- und Beta-Mischkristallmatrix mit bis zu 60 - 85 % Alphaphase. Das Gefüge enthält auch harte intermetallische Verbindungen, beispielsweise Eisen-Mangan-Silizide. Die Alphaphase ist entscheidend für die Temperaturbeständigkeit der Legierung.

Gleitlager aus dieser Legierung weisen einen besonders hohen Verschleißwiderstand auf, der sogar deutlich höher ist als der der Legierung CuZn31Si1. Der geringe Trockenreibverschleiß bei Gleitlagern aus besagter Legierung hat ein besseres Verhalten unter Mangelschmierungsbedingungen zur Folge. Somit gewährleistet der hohe Verschleißwiderstand auch die Notlaufeigenschaften eines Gleitlagers. Die verschleißmindernde Wirkung ist insbesondere bei Temperaturen um 300°C der Arbeitstemperatur der Gleitlager in modernen Motoren besonders vorteilhaft.

Im Vergleich zu den bisher verwendeten CuZn31Si1-Legierungen weist der neue beanspruchte Gleitlagerwerkstoff eine geringere Neigung zum Fressen auf, was durch den signifikant verringerten Reibbeiwert bedingt ist.

In einer weiteren Ausgestaltung wird die Verwendung einer Kupfer-Zink-Legierung beansprucht, wobei die Legierung 69,4 - 71,6 % Kupfer, 6,9 - 8,5 % Mangan, 4,3 - 6 % Aluminium, 1,1 - 2,6 % Silizium, 0,4 - 1,9 % Eisen, 0 - 0,1 % Blei, 0 - 0,8 % Nickel, 0 - 0,4 % Zinn, Rest Zink sowie unvermeidbare Verunreinigungen umfasst.

Das Gefüge der in üblicher Weise hergestellten Legierung weist eine Alpha- und Betakristallmatrix mit bis zu 80 % Alphaphase auf. Darüber hinaus sind harte intermetallische Verbindungen beispielsweise Eisen-Mangan-Silizide enthalten.

Vorteilhaft für die Verwendung dieser bleifreien und damit umweltverträglichen Legierung als Werkstoff für Gleitlager ist, dass im angestrebten Arbeitsbereich oberhalb 300°C ein hohes Härteniveau vorliegt und die Erweichung der Legierung erst oberhalb der Erweichungstemperatur der derzeit eingesetzten CuZn31Si1-Legierungen beginnt.

In einer weiteren Ausführungsform wird als Werkstoff für Gleitlager eine Kupfer-Zink-Legierung verwendet, wobei die Legierung 70 - 71 % Kupfer, 7,4 - 8,1 % Mangan, 4,8 - 5,7 % Aluminium, 1,5 - 2,2 % Silizium, 0,8 - 1,4 % Eisen, 0 - 0,1 % Blei, 0 - 0,3 % Nickel, 0 - 0,4 % Zinn, Rest Zink sowie unvermeidbare Verunreinigungen umfasst.

Das Gefüge besagter und entsprechend hergestellter Legierung weist eine Alpha- und Beta-Mischkristallmatrix auf. In dem Gefüge sind ebenfalls regellos disperse Mangan-Eisen-Silizide enthalten.

Diese bleifreie, umweltverträgliche Legierung weist neben einem niedrigen Reibungsbeiwert und einem verbesserten Verschleißwiderstand auch eine höhere Erweichungstemperatur auf.

In einer bevorzugten Alternative wird als Werkstoff für Gleitlager eine Kupfer-Zink-Legierung verwendet, wobei die Legierung 69,4 - 71,4 % Kupfer, 7,4 - 8,1 % Mangan, 4,8 - 5,7 % Aluminium, 1,7 - 2,2 % Silizium, 0,8 - 1,4 % Eisen, 0 - 0,1 % Blei, 0 - 0,3 % Nickel, 0 - 0,4 % Zinn, Rest Zink sowie unvermeidbare Verunreinigungen umfasst.

Gleitlager aus dieser Legierung weisen einen besonders hohen Verschleißwiderstand auf. Der geringe Trockenreibverschleiß bei Gleitlagern aus besagter Legierung hat ein besseres Verhalten unter Mangelschmierungsbedingungen zur Folge. Somit gewährleistet der hohe Verschleißwiderstand auch die Notlaufeigenschaften eines Gleitlagers. Die verschleißmindernde Wirkung ist insbesondere bei Temperaturen um 300°C der Arbeitstemperatur der Gleitlager in modernen Motoren besonders vorteilhaft.

Der hohe Verschleißwiderstand wird durch intermetallische Verbindungen, insbesondere Eisen-Mangan-Silizide bestimmt, wobei der Verschleißwiderstand mit zunehmendem Anteil an intermetallischen Verbindungen in der Legierung steigt. Ein hoher Anteil an intermetallischen Verbindungen wird durch einen hohen Si-Anteil bewirkt, wobei ein hoher Anteil der α-Phase für die Temperaturbeständigkeit durch den hohen Cu-Gehalt gewährleistet ist.

In einer weiteren Ausführungsform wird als Werkstoff für Gleitlager eine Kupfer-Zink-Legierung verwendet, wobei die Legierung mehr als 70 und bis zu 71,4 % Kupfer, 7,4 - 8,1 % Mangan, 4,8 - 5,7 % Aluminium, 1,8 - 2,2 % Silizium, 0,8 - 1,4 % Eisen, 0 - 0,1 % Blei, 0 - 0,3 % Nickel, 0 - 0,4 % Zinn, Rest Zink sowie unvermeidbare Verunreinigungen umfasst.

Gleitlager aus dieser Legierung weisen einen besonders hohen Verschleißwiderstand auf. Der geringe Trockenreibverschleiß bei Gleitlagern aus besagter Legierung hat ein besseres Verhalten unter Mangelschmierungsbedingungen zur Folge. Somit gewährleistet der hohe Verschleißwiderstand auch die Notlaufeigenschaften eines Gleitlagers. Die verschleißmindernde Wirkung ist insbesondere bei Temperaturen um 300°C der Arbeitstemperatur der Gleitlager in modernen Motoren besonders vorteilhaft.

Der hohe Verschleißwiderstand wird durch intermetallische Verbindungen, insbesondere Eisen-Mangan-Silizide bestimmt, wobei der Verschleißwiderstand mit zunehmendem Anteil an intermetallischen Verbindungen in der Legierung steigt. Ein hoher Anteil an intermetallischen Verbindungen wird durch einen hohen Si-Anteil bewirkt, wobei ein hoher Anteil der α-Phase für die Temperaturbeständigkeit der Legierung durch den hohen Cu-Gehalt bei gleich bleibendem Eisen- und Mangangehalt gewährleistet ist.

Zweckmäßiger Weise wird als Werkstoff für Gleitlager eine Kupfer-Zink-Legierung verwendet, wobei die Legierung zusätzlich wenigstens eines der Elemente Chrom, Vanadium, Titan oder Zirkon mit bis zu 0,1 % umfasst.

Die Zugabe dieser Elemente zu der Kupfer-Zink-Legierung wirkt kornfeinend.

Darüber hinaus kann die Kupfer-Zink-Legierung als Verwendung für ein Gleitlager zusätzlich wenigstens eines der folgenden Elemente mit einer Konzentration ≤ 0,0005 % Bor, ≤ 0,03 % Antimon, ≤ 0,03 % Phosphor, < 0,03 % Cadmium, ≤ 0,05 % Chrom, ≤ 0,05 % Titan, ≤ 0,05 % Zirkon und ≤ 0,05 % Kobalt umfassen.

Mehrere Ausführungsbeispiele werden anhand der nachstehenden Beschreibung und anhand Tabelle 1 näher erläutert.

Derzeit werden als Werkstoff für mäßig temperaturbeanspruchte Gleitlager Kupfer-Zink-Legierungen des CuZn31Si1-Typs mit etwa folgender Zusammensetzung eingesetzt: 68 % Kupfer, 1 % Silizium, 0,3 % Blei sowie Rest Zink. Im Folgenden wird eine diese Legierung als Standardlegierung bezeichnet. Legierung 1 entspricht der Legierung aus Anspruch 4 und hat eine Zusammensetzung von 70 % Kupfer, 7,7 % Mangan, 5,2 % Aluminium, 1,8 % Silizium, 1,1 % Eisen, 0,8 % Blei, Rest Zink sowie unvermeidbare Verunreinigungen. Legierung 2 entspricht der Legierung aus Anspruch 9 und hat eine Zusammensetzung von 65,5 % Kupfer, 7,7 % Mangan, 5,2 % Aluminium, 1,6 % Silizium, 1 % Eisen, 0,5 % Blei, 0,1 % Nickel, 0,2 % Zinn, Rest Zink nebst unvermeidlichen Verunreinigungen. Legierung 3 entspricht der Legierung aus Anspruch 14 und hat eine Zusammensetzung mit 70,5 % Kupfer, 7,7 % Mangan, 5,2 % Aluminium, 1,8 % Silizium, 1,1 % Eisen, 0,05 % Blei, 0,1 % Nickel, 0,2 % Zinn, Rest Zink sowie unvermeidbare Verunreinigungen.

Das Erweichungsverhalten der verschiedenen Werkstoffe ist bis zu einer Temperatur von 600°C untersucht worden. Dabei hat sich gezeigt, dass die Härte der Standardlegierung für Gleitlager bereits ab 250°C deutlich abnimmt und lediglich noch 130 HV50 bei 400°C beträgt, wobei die Abnahme der Härte mit zunehmender Temperatur weiter kontinuierlich erfolgt. Im Gegensatz dazu wurde für Legierung 1 im Temperaturbereich zwischen 200 und 450°C keine Verringerung der Härte gemessen. Erst nach 450°C nimmt auch die Härte der Legierung 1 mit weiter steigender Temperatur ab. Legierung 3 zeigt ebenfalls einen konstanten Härtewert, der sich von 250 bis 430°C erstreckt. Der stabile Härtewert von Legierung 3 erstreckt sich also über den Bereich hinaus, bei dem die Standardlegierung bereits deutliche Härteeinbußen verzeichnet. Der Verlauf der Härtewerte von Legierung 2 ist vergleichbar mit dem Härteverlauf der Standardlegierung, wobei Legierung 2 aber eine deutlich höhere Härte aufweist.

Die Legierungen 1 und 3 sowie Legierung 2 mit Einschränkungen haben damit ihr Härtemaximum bei den Temperaturen, die der Arbeitstemperatur von Gleitlagern in modernen Motoren entsprechen.

Die elektrische Leitfähigkeit kann als Maß für die Wärmeleitfähigkeit herangezogen werden, wobei ein hoher Wert für eine gute Wärmeleitfähigkeit steht. Die Standardlegierung weist eine elektrische Leitfähigkeit von 8,2 m/Ωmm² auf. Die elektrische Leitfähigkeit der Legierungen 1, 2 und 3 ist mit 4,6 m/Ωmm², 4 m/Ωmm² bzw. 5,4 m/Ωmm² geringer als die der Standardlegierung. Dies bedeutet, dass im Vergleich zur Standardlegierung die Wärmeabfuhr der Legierungen 1, 2 und 3 reduziert ist. In Folge der ansonsten überragenden Eigenschaften ist dies jedoch akzeptabel.

Das Verschleißverhalten wurde mit und ohne Schmierstoff untersucht. Mit Schmierstoff hat Legierung 3 die höchste Verschleißbeständigkeit (1250 km/g).

Legierung 1 hat eine ebenfalls hervorragende Verschleißbeständigkeit von 961 km/g, was um nahezu zwei Größenordnungen höher ist, als die Verschleißbeständigkeit der Standardlegierung mit 12 km/g. Die Verschleißbeständigkeit der Legierung 2 übertrifft mit 568 km/g die Verschleißbeständigkeit der Standardlegierung um etwa eineinhalb Größenordnungen.

Bei Untersuchungen des Verschleißverhaltens ohne Schmierstoff hat sich bestätigend gezeigt, dass die Legierungen 1 und 3 deutliche Vorteile gegenüber der Standardlegierung haben. Der Verschleiß der Standardlegierung beträgt 357 km/g wogegen der Verschleiß der beiden Legierungen 1 und 3 jeweils 1250 km/g beträgt. Die Verschleißbeständigkeit ist folglich jeweils um den Faktor drei höher als die Verschleißbeständigkeit der Standardlegierung. In anderen Worten, der Verschleiß ist deutlich geringer. Legierung 2 hat einen gegenüber der Standardlegierung geringfügig höheren Verschleiß von 417 km/g.

Die Legierungen 1, 2 und 3 lassen sich bevorzugt herstellen durch halb- oder vollkontinuierlichen Strangguss, Strangpressen, Ziehen und Richten.

Ein Reibbeiwert von 0,29, wie ihn die Standardlegierung aufweist, galt bislang als niedriger Reibbeiwert und somit galt das Material des Typs CuZn31Si1 als idealer Gleitlagerwerkstoff. Die Legierungen 1, 2 und 3, die bisher als Synchronringwerkstoff - erfordert einen hohen Reibbeiwert - verwendet wurden zeigen, dass der für diese bekannte Verwendung als hoch eingestufte Reibbeiwert überraschender Weise eigentlich niedrig ist. So ist der Reibbeiwert der Legierung 2 mit 0,14 nur halb so groß wie der bislang als niedrig eingestufte Reibbeiwert der Standardlegierung. Die Legierungen 1 und 3 zeigen sogar Reibbeiwerte von 0,10 bzw. 0,11, die lediglich ein Drittel des niedrigen Reibbeiwerts der Standardlegierung betragen. Folglich bieten sich die Legierungen 1, 2 und 3 überraschend für eine Verwendung als Gleitlagerwerkstoff an, dessen Gleiteigenschaften auf Grund des geringen Reibwertes deutlich verbessert werden.

Die Legierungen 1, 2 und 3 haben gegenüber der bisherigen für Gleitlager verwendeten Standardlegierung deutliche Vorteile. Diese Vorteile betreffen unter anderem die Erweichungstemperatur, die Gleiteigenschaften und die Verschleißbeständigkeit. Darüber hinaus ist auch die Leitfähigkeit ausreichend. Folglich stellen die Legierungen 1, 2 und 3 in Bezug auf eine Verwendung als Gleitlagerwerkstoff eine erhebliche Verbesserung dar. Diese Legierungen entsprechen den Anforderungen an den Werkstoff, die dieser infolge der erhöhten Betriebstemperaturen in modernen Dieselmotoren aufweisen muss.

Tabelle 1 zeigt die Materialeigenschaften einer Kupfer-Zink-Standardlegierung sowie der Legierung 1, Legierung 2 und Legierung 3 im Vergleich.

| Eigenschaft | Standardlegierung | Legierung 1 | Legierung 2 | Legierung 3 |
|---|---|---|---|---|
| elektr. Leitfähigkeit (m/Ωmm²) | 8,2 | 4,6 | 4,0 | 5,4 |
| Verschleiß trocken (km/g) | 357 | 1250 | 417 | 1250 |
| Verschleiß geschmiert (km/g) | 12 | 961 | 568 | 1250 |
| Erweichungstemperatur 10% kaltverformt (°C) | 350 | 480 | 370 | 480 |
| Reibwert | 0,29 | 0,10 | 0,14 | 0,11 |

Vergleichbare Eigenschaften wie Legierung 1 weist folgende Legierung auf: 70,2 % Kupfer, 7,8 % Mangan, 5,3 % Aluminium, 1,8 % Silizium, 1,1 % Eisen, 0,8 % Blei, Rest Zink sowie unvermeidbare Verunreinigungen. Ähnliche Eigenschaften wie Legierung 2 besitzt eine Legierung mit 65,6 % Kupfer, 7,8 % Mangan, 5,3 % Aluminium, 1,8 % Silizium, 1,1 % Eisen, 0,5 % Blei, 0,1 % Nickel, 0,2 % Zinn, Rest Zink sowie unvermeidbare Verunreinigungen. Eine Legierung mit 70,5 % Kupfer, 7,8 % Mangan, 5,3 % Aluminium, 1,8 % Silizium, 1,1 % Eisen, 0,05 % Blei, 0,1 % Nickel, 0,2 % Zinn, Rest Zink sowie unvermeidbare Verunreinigungen zeigt Eigenschaften, die denen der Legierung 3 entsprechen.

## Patentansprüche

1. Verwendung einer Kupfer-Zink-Legierung als Werkstoff für ein Gleitlager, die Legierung bestehend aus (in Gewichtsprozent):
68 - 72,5 % Kupfer, 5,8 - 8,5 % Mangan, 3,6 - 6,3 % Aluminium, 0,5 - 3,3 % Silizium, 0,2 - 2,5 % Eisen, 0,2 - 1,9 % Blei, 0 - 1,5 % Nickel, 0 - 0,4 % Zinn, wahlweise noch bis zu 0,1 % wenigstens eines der Elemente Chrom, Vanadium, Titan oder Zirkon,
wahlweise noch bis 0,0005 % Bor,
wahlweise noch bis 0,03 % Antimon,
wahlweise noch bis 0,03 % Phosphor,
wahlweise noch weniger als 0,03 % Cadmium,
wahlweise noch bis 0,03 % Kobalt,
Rest Zink sowie unvermeidbare Verunreinigungen.

2. Verwendung einer Kupfer-Zink-Legierung nach Anspruch 1, wobei die Legierung 68,9 - 71,4 % Kupfer, 6,9 - 8,5 % Mangan, 4,3 - 6 % Aluminium, 1,1 - 2,6 % Silizium, 0,4 - 1,9 % Eisen, 0,3 - 1,6 % Blei, 0 - 0,8 % Nickel, 0 - 0,4 % Zinn, Rest Zink sowie unvermeidbare Verunreinigungen umfasst.

3. Verwendung einer Kupfer-Zink-Legierung nach Anspruch 2, wobei die Legierung 69,5 - 70,5 % Kupfer, 7,4 - 8,1 % Mangan, 4,8 - 5,7 % Aluminium, 1,5 - 2,2 % Silizium, 0,8 - 1,4 % Eisen, 0,4 - 1,2 % Blei, 0 - 0,3 % Nickel, 0 - 0,4 % Zinn, Rest Zink sowie unvermeidbare Verunreinigungen umfasst.

4. Verwendung einer Kupfer-Zink-Legierung nach Anspruch 2, wobei die Legierung 69,4 - 71,4 % Kupfer, 7,4 - 8,1 % Mangan, 4,8 - 5,7 % Aluminium, 1,7 - 2,2 % Silizium, 0,8 - 1,4 % Eisen, 0,4 - 1,2 % Blei, 0 - 0,3 % Nickel, 0 - 0,4 % Zinn, Rest Zink sowie unvermeidbare Verunreinigungen umfasst.

5. Verwendung einer Kupfer-Zink-Legierung nach Anspruch 4, wobei die Legierung mehr als 70 und bis zu 71,4 % Kupfer, 7,4 - 8,1 % Mangan, 4,8 - 5,7 % Aluminium, 1,8 - 2,2 % Silizium, 0,8 - 1,4 % Eisen, 0,4 - 1,2 % Blei, 0 - 0,3 % Nickel, 0 - 0,4 % Zinn, Rest Zink sowie unvermeidbare Verunreinigungen umfasst.

6. Verwendung einer Kupfer-Zink-Legierung als Werkstoff für ein Gleitlager, die Legierung bestehend aus (in Gewichtsprozent): 63,5 - 67,5 % Kupfer, 6 - 8,5 % Mangan, 3,6 - 6,3 % Aluminium, 0,5 - 3 % Silizium, 0,2 - 2,5 % Eisen, 0,02 - 1,8 % Blei, 0 - 1,5 % Nickel, 0 - 0,4 % Zinn,
wahlweise noch bis zu 0,1 % wenigstens eines der Elemente Chrom, Vanadium, Titan oder Zirkon,
wahlweise noch bis 0,0005 % Bor,
wahlweise noch bis 0,03 % Antimon,
wahlweise noch bis 0,03 % Phosphor,
wahlweise noch weniger als 0,03 % Cadmium,
wahlweise noch bis 0,03 % Kobalt,
Rest Zink sowie unvermeidbare Verunreinigungen.

7. Verwendung einer Kupfer-Zink-Legierung nach Anspruch 6, wobei die Legierung 64,5 - 66,5 % Kupfer, 6,9 - 8,5 % Mangan, 4,3 - 6 % Aluminium, 0,9 - 2,6 % Silizium, 0,4 - 1,9 % Eisen, 0,1 - 1,3 % Blei, 0 - 0,8 % Nickel, 0 - 0,4 % Zinn, Rest Zink sowie unvermeidbare Verunreinigungen umfasst.

8. Verwendung einer Kupfer-Zink-Legierung nach Anspruch 7, wobei die Legierung 65,1 - 66 % Kupfer, 7,4 - 8,1 % Mangan, 4,8 - 5,7 % Aluminium, 1,3 - 2 % Silizium, 0,8 - 1,4 % Eisen, 0,2 - 0,9 % Blei, 0 - 0,3 % Nickel, 0 - 0,4 % Zinn, Rest Zink sowie unvermeidbare Verunreinigungen umfasst.

9. Verwendung einer Kupfer-Zink-Legierung nach Anspruch 8, wobei die Legierung 65,1 - 66 % Kupfer, 7,4 - 8,1 % Mangan, 4,8 - 5,7 % Aluminium, 1,7 - 2 % Silizium, 0,8 - 1,4 % Eisen, 0,2 - 0,9 % Blei, 0 - 0,3 % Nickel, 0 - 0,4 % Zinn, Rest Zink sowie unvermeidbare Verunreinigungen umfasst.

10. Verwendung einer Kupfer-Zink-Legierung nach Anspruch 9, wobei die Legierung 65,1 - 66 % Kupfer, 7,4 - 8,1 % Mangan, 4,8 - 5,7 % Aluminium, 1,8 - 2 % Silizium, 0,8 - 1,4 % Eisen, 0,2 - 0,9 % Blei, 0 - 0,3 % Nickel, 0 - 0,4 % Zinn, Rest Zink sowie unvermeidbare Verunreinigungen umfasst.

11. Verwendung einer Kupfer-Zink-Legierung als Werkstoff für ein Gleitlager, die Legierung bestehend aus (in Gewichtsprozent): 68,3 - 72,7 % Kupfer, 5,7 - 8,5 % Mangan, 3,6 - 6,3 % Aluminium, 0,5 - 3,3 % Silizium, 0,2 - 2,5 % Eisen, 0 - 0,1 % Blei, 0 -1,5 % Nickel, 0 - 0,4 % Zinn,
wahlweise noch bis zu 0,1 % wenigstens eines der Elemente Chrom, Vanadium, Titan oder Zirkon,
wahlweise noch bis 0,0005 % Bor,
wahlweise noch bis 0,03 % Antimon,
wahlweise noch bis 0,03 % Phosphor,
wahlweise noch weniger als 0,03 % Cadmium,
wahlweise noch bis 0,03 % Kobalt,
Rest Zink sowie unvermeidbare Verunreinigungen.

12. Verwendung einer Kupfer-Zink-Legierung nach Anspruch 11, wobei die Legierung 69,4 - 71,6 % Kupfer, 6,9 - 8,5 % Mangan, 4,3 - 6 % Aluminium, 1,1 - 2,6 % Silizium, 0,4 - 1,9 % Eisen, 0 - 0,1 % Blei, 0 - 0,8 % Nickel, 0 - 0,4 % Zinn, Rest Zink sowie unvermeidbare Verunreinigungen umfasst.

13. Verwendung einer Kupfer-Zink-Legierung nach Anspruch 12, wobei die Legierung 70 - 71 % Kupfer, 7,4 - 8,1 % Mangan, 4,8 - 5,7 % Aluminium, 1,5 - 2,2 % Silizium, 0,8 - 1,4 % Eisen, 0 - 0,1 % Blei, 0 - 0,3 % Nickel, 0 - 0,4 % Zinn, Rest Zink sowie unvermeidbare Verunreinigungen umfasst.

14. Verwendung einer Kupfer-Zink-Legierung nach Anspruch 12, wobei die Legierung 69,4 - 71,4 % Kupfer, 7,4 - 8,1 % Mangan, 4,8 - 5,7 % Aluminium, 1,7 - 2,2 % Silizium, 0,8 - 1,4 % Eisen, 0 - 0,1 % Blei, 0 - 0,3 % Nickel, 0 - 0,4 % Zinn, Rest Zink sowie unvermeidbare Verunreinigungen umfasst.

15. Verwendung einer Kupfer-Zink-Legierung nach Anspruch 14, wobei die Legierung mehr als 70 und bis zu 71,4 % Kupfer, 7,4 - 8,1 % Mangan, 4,8 - 5,7 % Aluminium, 1,8 - 2,2 % Silizium, 0,8 - 1,4 % Eisen, 0 - 0,1 % Blei, 0 - 0,3 % Nickel, 0 - 0,4 % Zinn, Rest Zink sowie unvermeidbare Verunreinigungen umfasst.

## Claims

1. Use of a copper-zinc alloy as material for a slide bearing, said alloy consisting of (in per cent by weight):
68-72.5% copper, 5.8-8.5% manganese, 3.6-6.3% aluminium, 0.5-3.3% silicon, 0.2-2.5% iron, 0.2-1.9% lead, 0-1.5% nickel, 0-0.4% tin,
optionally also up to 0.1% of at least one of the elements chromium, vanadium, titanium or zirconium,
optionally also up to 0.0005% boron,
optionally also up to 0.03% antimony,
optionally also up to 0.03% phosphorus,
optionally also less than 0.03% cadmium,
optionally also up to 0.03% cobalt,
the balance being zinc and unavoidable impurities.

2. Use of a copper-zinc alloy according to Claim 1, wherein the alloy comprises 68.9-71.4% copper, 6.9-8.5% manganese, 4.3-6% aluminium, 1.1-2.6% silicon, 0.4-1.9% iron, 0.3-1.6% lead, 0-0.8% nickel, 0-0.4% tin, the balance being zinc and unavoidable impurities.

3. Use of a copper-zinc alloy according to Claim 2, wherein the alloy comprises 69.5-70.5% copper, 7.4-8.1% manganese, 4.8-5.7% aluminium, 1.5-2.2% silicon, 0.8-1.4% iron, 0.4-1.2% lead, 0-0.3% nickel, 0-0.4% tin, the balance being zinc and unavoidable impurities.

4. Use of a copper-zinc alloy according to Claim 2, wherein the alloy comprises 69.4-71.4% copper, 7.4-8.1% manganese, 4.8-5.7% aluminium, 1.7-2.2% silicon, 0.8-1.4% iron, 0.4-1.2% lead, 0-0.3% nickel, 0-0.4% tin, the balance being zinc and unavoidable impurities.

5. Use of a copper-zinc alloy according to Claim 4, wherein the alloy comprises more than 70% and up to 71.4% copper, 7.4-8.1% manganese, 4.8-5.7% aluminium, 1.8-2.2% silicon, 0.8-1.4% iron, 0.4-1.2% lead, 0-0.3% nickel, 0-0.4% tin, the balance being zinc and unavoidable impurities.

6. Use of a copper-zinc alloy as material for a slide bearing, said alloy consisting of (in per cent by weight): 63.5-67.5% copper, 6-8.5% manganese, 3.6-6.3% aluminium, 0.5-3% silicon, 0.2-2.5% iron, 0.02-1.8% lead, 0-1.5% nickel, 0-0.4% tin,
optionally also up to 0.1% of at least one of the elements chromium, vanadium, titanium or zirconium,
optionally also up to 0.0005% boron,
optionally also up to 0.03% antimony,
optionally also up to 0.03% phosphorus,
optionally also less than 0.03% cadmium,
optionally also up to 0.03% cobalt,
the balance being zinc and unavoidable impurities.

7. Use of a copper-zinc alloy according to Claim 6, wherein the alloy comprises 64.5-66.5% copper, 6.9-8.5% manganese, 4.3-6% aluminium, 0.9-2.6% silicon, 0.4-1.9% iron, 0.1-1.3% lead, 0-0.8% nickel, 0-0.4% tin, the balance being zinc and unavoidable impurities.

8. Use of a copper-zinc alloy according to Claim 7, wherein the alloy comprises 65.1-66% copper, 7.4-8.1% manganese, 4.8-5.7% aluminium, 1.3-2% silicon, 0.8-1.4% iron, 0.2-0.9% lead, 0-0.3% nickel, 0-0.4% tin, the balance being zinc and unavoidable impurities.

9. Use of a copper-zinc alloy according to Claim 8, wherein the alloy comprises 65.1-66% copper, 7.4-8.1% manganese, 4.8-5.7% aluminium, 1.7-2% silicon, 0.8-1.4% iron, 0.2-0.9% lead, 0-0.3% nickel, 0-0.4% tin, the balance being zinc and unavoidable impurities.

10. Use of a copper-zinc alloy according to Claim 9, wherein the alloy comprises 65.1-66% copper, 7.4-8.1% manganese, 4.8-5.7% aluminium, 1.8-2% silicon, 0.8-1.4% iron, 0.2-0.9% lead, 0-0.3% nickel, 0-0.4% tin, the balance being zinc and unavoidable impurities.

11. Use of a copper-zinc alloy as material for a slide bearing, said alloy consisting of (in per cent by weight): 68.3-72.7% copper, 5.7-8.5% manganese, 3.6-6.3% aluminium, 0.5-3.3% silicon, 0.2-2.5% iron, 0-0.1% lead, 0-1.5% nickel, 0-0.4% tin,
optionally also up to 0.1% of at least one of the elements chromium, vanadium, titanium or zirconium,
optionally also up to 0.0005% boron,
optionally also up to 0.03% antimony,
optionally also up to 0.03% phosphorus,
optionally also less than 0.03% cadmium,
optionally also up to 0.03% cobalt,
the balance being zinc and unavoidable impurities.

12. Use of a copper-zinc alloy according to Claim 11, wherein the alloy comprises 69.4-71.6% copper, 6.9-8.5% manganese, 4.3-6% aluminium, 1.1-2.6% silicon, 0.4-1.9% iron, 0-0.1% lead, 0-0.8% nickel, 0-0.4% tin, the balance being zinc and unavoidable impurities.

13. Use of a copper-zinc alloy according to Claim 12, wherein the alloy comprises 70-71% copper, 7.4-8.1% manganese, 4.8-5.7% aluminium, 1.5-2.2% silicon, 0.8-1.4% iron, 0-0.1% lead, 0-0.3% nickel, 0-0.4% tin, the balance being zinc and unavoidable impurities.

14. Use of a copper-zinc alloy according to Claim 12, wherein the alloy comprises 69.4-71.4% copper, 7.4-8.1% manganese, 4.8-5.7% aluminium, 1.7-2.2% silicon, 0.8-1.4% iron, 0-0.1% lead, 0-0.3% nickel, 0-0.4% tin, the balance being zinc and unavoidable impurities.

15. Use of a copper-zinc alloy according to Claim 14, wherein the alloy comprises more than 70% and up to 71.4% copper, 7.4-8.1% manganese, 4.8-5.7% aluminium, 1.8-2.2% silicon, 0.8-1.4% iron, 0-0.1% lead, 0-0.3% nickel, 0-0.4% tin, the balance being zinc and unavoidable impurities.

## Revendications

1. Utilisation d'un alliage cuivre-zinc en tant que matériau pour un palier lisse, l'alliage étant constitué de (en pour cent en poids) : 68 à 72,5 % de cuivre, 5,8 à 8,5 % de manganèse, 3,6 à 6,3 % d'aluminium, 0,5 à 3,3 % de silicium, 0,2 à 2,5 % de fer, 0,2 à 1,9 % de plomb, 0 à 1,5 % de nickel, 0 à 0,4 % d'étain,
éventuellement encore jusqu'à 0,1 % d'au moins un des éléments chrome, vanadium, titane ou zirconium,
éventuellement encore jusqu'à 0,0005 % de bore,
éventuellement encore jusqu'à 0,03 % d'antimoine,
éventuellement encore jusqu'à 0,03 % de phosphore,
éventuellement encore moins de 0,03 % de cadmium,
éventuellement encore jusqu'à 0,03 % de cobalt,
le reste étant du zinc et des impuretés inévitables.

2. Utilisation d'un alliage cuivre-zinc selon la revendication 1, l'alliage comprenant 68,9 à 71,4 % de cuivre, 6,9 à 8,5 % de manganèse, 4,3 à 6 % d'aluminium, 1,1 à 2,6 % de silicium, 0,4 à 1,9 % de fer, 0,3 à 1,6 % de plomb, 0 à 0,8 % de nickel, 0 à 0,4 % d'étain, le reste étant du zinc et des impuretés inévitables.

3. Utilisation d'un alliage cuivre-zinc selon la revendication 2, l'alliage comprenant 69,5 à 70,5 % de cuivre, 7,4 à 8,1 % de manganèse, 4,8 à 5,7 % d'aluminium, 1,5 à 2,2 % de silicium, 0,8 à 1,4 % de fer, 0,4 à 1,2 % de plomb, 0 à 0,3 % de nickel, 0 à 0,4 % d'étain, le reste étant du zinc et des impuretés inévitables.

4. Utilisation d'un alliage cuivre-zinc selon la revendication 2, l'alliage comprenant 69,4 à 71,4 % de cuivre, 7,4 à 8,1 % de manganèse, 4,8 à 5,7 % d'aluminium, 1,7 à 2,2 % de silicium, 0,8 à 1,4 % de fer, 0,4 à 1,2 % de plomb, 0 à 0,3 % de nickel, 0 à 0,4 % d'étain, le reste étant du zinc et des impuretés inévitables.

5. Utilisation d'un alliage cuivre-zinc selon la revendication 4, l'alliage comprenant plus de 70 et jusqu'à 71,4 % de cuivre, 7,4 à 8,1 % de manganèse, 4,8 à 5,7 % d'aluminium, 1,8 à 2,2 % de silicium, 0,8 à 1,4 % de fer, 0,4 à 1,2 % de plomb, 0 à 0,3 % de nickel, 0 à 0,4 % d'étain, le reste étant du zinc et des impuretés inévitables.

6. Utilisation d'un alliage cuivre-zinc en tant que matériau pour un palier lisse, l'alliage étant constitué de (en pour cent en poids) : 63,5 à 67,5 % de cuivre, 6 à 8,5 % de manganèse, 3,6 à 6,3 % d'aluminium, 0,5 à 3 % de silicium, 0,2 à 2,5 % de fer, 0,02 à 1,8 % de plomb, 0 à 1,5 % de nickel, 0 à 0,4 % d'étain,
éventuellement encore jusqu'à 0,1 % d'au moins un des éléments chrome, vanadium, titane ou zirconium,
éventuellement encore jusqu'à 0,0005 % de bore,
éventuellement encore jusqu'à 0,03 % d'antimoine,
éventuellement encore jusqu'à 0,03 % de phosphore,
éventuellement encore moins de 0,03 % de cadmium,
éventuellement encore jusqu'à 0,03 % de cobalt,
le reste étant du zinc et des impuretés inévitables.

7. Utilisation d'un alliage cuivre-zinc selon la revendication 6, l'alliage comprenant 64,5 à 66,5 % de cuivre, 6,9 à 8,5 % de manganèse, 4,3 à 6 % d'aluminium, 0,9 à 2,6 % de silicium, 0,4 à 1,9 % de fer, 0,1 à 1,3 % de plomb, 0 à 0,8 % de nickel, 0 à 0,4 % d'étain, le reste étant du zinc et des impuretés inévitables.

8. Utilisation d'un alliage cuivre-zinc selon la revendication 7, l'alliage comprenant 65,1 à 66 % de cuivre, 7,4 à 8,1 % de manganèse, 4,8 à 5,7 % d'aluminium, 1,3 à 2 % de silicium, 0,8 à 1,4 % de fer, 0,2 à 0,9 % de plomb, 0 à 0,3 % de nickel, 0 à 0,4 % d'étain, le reste étant du zinc et des impuretés inévitables.

9. Utilisation d'un alliage cuivre-zinc selon la revendication 8, l'alliage comprenant 65,1 à 66 % de cuivre, 7,4 à 8,1 % de manganèse, 4,8 à 5,7 % d'aluminium, 1,7 à 2 % de silicium, 0,8 à 1,4 % de fer, 0,2 à 0,9 % de plomb, 0 à 0,3 % de nickel, 0 à 0,4 % d'étain, le reste étant du zinc et des impuretés inévitables.

10. Utilisation d'un alliage cuivre-zinc selon la revendication 9, l'alliage comprenant 65,1 à 66 % de cuivre, 7,4 à 8,1 % de manganèse, 4,8 à 5,7 % d'aluminium, 1,8 à 2 % de silicium, 0,8 à 1,4 % de fer, 0,2 à 0,9 % de plomb, 0 à 0,3 % de nickel, 0 à 0,4 % d'étain, le reste étant du zinc et des impuretés inévitables.

11. Utilisation d'un alliage cuivre-zinc en tant que matériau pour un palier lisse, l'alliage étant constitué de (en pour cent en poids) : 68,3 à 72,7 % de cuivre, 5,7 à 8,5 % de manganèse, 3,6 à 6,3 % d'aluminium, 0,5 à 3,3 % de silicium, 0,2 à 2,5 % de fer, 0 à 0,1 % de plomb, 0 à 1,5 % de nickel, 0 à 0,4 % d'étain,
éventuellement encore jusqu'à 0,1 % d'au moins un des éléments chrome, vanadium, titane ou zirconium,
éventuellement encore jusqu'à 0,0005 % de bore,
éventuellement encore jusqu'à 0,03 % d'antimoine,
éventuellement encore jusqu'à 0,03 % de phosphore,
éventuellement encore moins de 0,03 % de cadmium,
éventuellement encore jusqu'à 0,03 % de cobalt,
le reste étant du zinc et des impuretés inévitables.

12. Utilisation d'un alliage cuivre-zinc selon la revendication 11, l'alliage comprenant 69,4 à 71,6 % de cuivre, 6,9 à 8,5 % de manganèse, 4,3 à 6 % d'aluminium, 1,1 à 2,6 % de silicium, 0,4 à 1,9 % de fer, 0 à 0,1 % de plomb, 0 à 0,8 % de nickel, 0 à 0,4 % d'étain, le reste étant du zinc et des impuretés inévitables.

13. Utilisation d'un alliage cuivre-zinc selon la revendication 12, l'alliage comprenant 70 à 71 % de cuivre, 7,4 à 8,1 % de manganèse, 4,8 à 5,7 % d'aluminium, 1,5 à 2,2 % de silicium, 0,8 à 1,4 % de fer, 0 à 0,1 % de plomb, 0 à 0,3 % de nickel, 0 à 0,4 % d'étain, le reste étant du zinc et des impuretés inévitables.

14. Utilisation d'un alliage cuivre-zinc selon la revendication 12, l'alliage comprenant 69,4 à 71,4 % de cuivre, 7,4 à 8,1 % de manganèse, 4,8 à 5,7 % d'aluminium, 1,7 à 2,2 % de silicium, 0,8 à 1,4 % de fer, 0 à 0,1 % de plomb, 0 à 0,3 % de nickel, 0 à 0,4 % d'étain, le reste étant du zinc et des impuretés inévitables.

15. Utilisation d'un alliage cuivre-zinc selon la revendication 14, l'alliage comprenant plus de 70 et jusqu'à 71,4 % de cuivre, 7,4 à 8,1 % de manganèse, 4,8 à 5,7 % d'aluminium, 1,8 à 2,2 % de silicium, 0,8 à 1,4 % de fer, 0 à 0,1 % de plomb, 0 à 0,3 % de nickel, 0 à 0,4 % d'étain, le reste étant du zinc et des impuretés inévitables.
